# EUROPEAN PATENT APPLICATION

(11) **EP 4 575 899 A1**
(43) Date of publication of application: **25.06.2025**
(21) Application number: 23862078.5
(22) Date of filing: 27.07.2023
(51) Int. Cl.: G06N 3/0464

(54) **MODEL OPTIMIZATION METHOD AND APPARATUS AND COMPUTING DEVICE**

(30) Priority: 07.09.2022 CN 202211098928
(71) Applicant: Huawei Cloud Computing Technologies Co., Ltd., Guiyang, Guizhou 550025 (CN)
(72) Inventor: MAI, Yuting, Guiyang, Guizhou 550025 (CN); XIE, Wen, Guiyang, Guizhou 550025 (CN); DAI, Zonghong, Guiyang, Guizhou 550025 (CN); LONG, Guoping, Guiyang, Guizhou 550025 (CN)
(74) Representative: Thun, Clemens
(86) International application number: PCT/CN2023/109454
(87) International publication number: WO 2024/051377

(57) **Abstract**

A model optimization method is provided. The method includes: receiving optimization request information entered by a user or sent by an artificial intelligence AI application, where the optimization request information includes a first model file, the first model file includes M operators, each operator is used to perform one matrix multiplication calculation, each operator corresponds to one kernel function, and M is a positive integer; generating a second model file based on the first model file, where the second model file includes N fused operators, each fused operator is used to perform at least two matrix multiplication calculations, each fused operator corresponds to one kernel function, N is a positive integer, and N<M; and providing the second model file for the user or sending the second model file to the AI application.

## Description

This application claims priority to Chinese Patent Application No. 202211098928.9, filed with the China National Intellectual Property Administration on September 7, 2022 and entitled "MODEL OPTIMIZATION METHOD AND APPARATUS, AND COMPUTING DEVICE", which is incorporated herein by reference in its entirety.

### TECHNICAL FIELD

This application relates to the field of model optimization, and more specifically, to a model optimization method and apparatus, and a computing device.

### BACKGROUND

Deep learning technologies are continuously applied to various industries, and application of a transformer (transformer) network model based on an attention mechanism in the natural language field is especially prominent. A biggest performance bottleneck of running this series of models on hardware is matrix multiplication (matrix multiply, MatMul) calculations of the models. A bidirectional encoder representation from transformers (bidirectional encoder representation from transformers, BERT) model is used as an example. When the model is run on graphics processing unit (graphics processing unit, GPU) V100 hardware, 398 kernel function calculations need to be performed, and there are 96 general matrix multiplication (general matrix multiply, GEMM) calculations in total, whose calculation time accounts for more than 80% of total calculation time.

Currently, a known solution is that one MatMul operator corresponds to one GEMM function. One BERT model has 96 MatMuls. A large quantity of MatMuls increase load of low-level kernel function calculation scheduling. However, when an operand of the MatMul is a small matrix, a stream multiprocessing (stream multiprocessing, SM) module of a GPU chip may not be fully utilized.

Therefore, how to reduce a quantity of kernel function scheduling times to optimize model performance is a technical problem that needs to be urgently resolved currently.

### SUMMARY

Embodiments of this application provide a model optimization method and apparatus, and a computing device, so that a fused calculation can be performed on a plurality of matrix multiplications, to reduce a quantity of kernel function scheduling times to optimize model performance.

According to a first aspect, a model optimization method is provided. The method includes: receiving optimization request information entered by a user or sent by an artificial intelligence AI application, where the optimization request information includes a first model file, the first model file includes M operators, each operator is used to perform one matrix multiplication calculation, each operator corresponds to one kernel function, and M is a positive integer; generating a second model file based on the first model file, where the second model file includes N fused operators, each fused operator is used to perform at least two matrix multiplication calculations, each fused operator corresponds to one kernel function, N is a positive integer, and N<M; and providing the second model file for the user or sending the second model file to the AI application.

This embodiment of this application provides the model optimization method, so that a fused calculation can be performed on a plurality of matrix multiplications, to reduce a quantity of kernel function scheduling times to optimize model performance.

For example, the first model file may be a computational graph high-level description of a model, or may be an intermediate representation (intermediate representation, IR) of a model. It should be understood that, in this embodiment of this application, a fused matrix multiplication calculation can open larger low-level scheduling space. For example, block (block) or grid (grid) division is performed, to achieve a more optimal model optimization result.

Optionally, in this embodiment of this application, the kernel function corresponding to each fused operator may be used to complete a fused calculation of a plurality of matrix multiplication calculations (for example, MatMul operators) by invoking an open-source third-party library, or may be used to complete a fused calculation of a plurality of matrix multiplication calculations (for example, MatMul operators) by using user-defined function code that is locally compiled by a user. This is not limited in this application.

With reference to the first aspect, in some implementations of the first aspect, the first model file is a model file of a trained AI model.

This embodiment of this application provides the model optimization method, so that a fused calculation can be performed on a plurality of matrix multiplications in a trained AI file, to reduce a quantity of kernel function scheduling times to optimize model performance.

With reference to the first aspect, in some implementations of the first aspect, any matrix multiplication calculation performed by using each fused operator does not depend on a calculation result of another matrix multiplication calculation performed by using the same fused operator.

For example, in this embodiment of this application, first, a plurality of matrix multiplication calculations in the first model file may be traversed, and a plurality of matrix multiplication calculations unrelated in a time sequence may be grouped into one fused group; and then, the plurality of matrix multiplication calculations in the fused group may be performed in parallel, in other words, a plurality of MatMul operators may be fused into one operator for calculation. In this embodiment of this application, after a plurality of MatMul operators in one fused group are fused into one operator, calculations can be completed by calling a kernel function only once, thereby reducing a quantity of kernel function scheduling times to optimize model performance. It should be understood that each fused operator is used to perform matrix multiplication calculations in one fused group, and one fused operator corresponds to one fused group.

It should be understood that a result of a matrix multiplication calculation is not used as input of another matrix multiplication calculation belonging to a same fused group as the matrix multiplication calculation, in other words, matrix multiplication calculations in each fused group do not depend on each other, and the matrix multiplication calculations in each fused group have no dependency relationship in a time sequence.

This embodiment of this application provides the model optimization method, so that a fused calculation can be performed on a plurality of matrix multiplications unrelated in a time sequence, to reduce a quantity of kernel function scheduling times to optimize model performance and improve calculation efficiency.

With reference to the first aspect, in some implementations of the first aspect, that each operator is used to perform one matrix multiplication calculation includes: each operator is used to perform a matrix multiplication calculation between a left hand side matrix and a right hand side matrix.

It should be understood that the matrix multiplication calculation includes a multiplication operation between the left hand side matrix and the right hand side matrix.

With reference to the first aspect, in some implementations of the first aspect, the generating a second model file based on the first model file includes: generating the second model file based on a dimension of a left hand side matrix or a dimension of a right hand side matrix in the first model file.

It should be understood that, when left hand side matrices of a plurality of MatMuls belonging to one fused group have a same dimension, and right hand side matrices of the plurality of MatMuls belonging to the fused group have a same dimension, a standard general matrix multiplication (general matrix multiply, GEMM) calculation may be performed, so that calculation time can be shortened, to improve calculation efficiency. Therefore, in this embodiment of this application, first, the plurality of matrix multiplication calculations in the first model file may be traversed, and matrix multiplication calculations whose left hand side matrices have a same dimension or whose right hand side matrices have a same dimension may be grouped into one fused group; and then, a kernel function may be called to perform the plurality of matrix multiplication calculations in the fused group.

Optionally, in this embodiment of this application, matrix multiplication calculations unrelated in a time sequence and whose left hand side matrices have a same dimension or whose right hand side matrices have a same dimension may be grouped into one fused group, and then a kernel function may be called to perform the plurality of matrix multiplication calculations in the fused group.

This embodiment of this application provides the model optimization method, so that a fused calculation can be performed on a plurality of matrix multiplications whose dimensions match, to reduce a quantity of kernel function scheduling times to optimize model performance and improve calculation efficiency.

With reference to the first aspect, in some implementations of the first aspect, left hand side matrices of a plurality of matrix multiplication calculations performed by using a first fused operator have a same dimension, right hand side matrices of the plurality of matrix multiplication calculations performed by using the first fused operator have a same dimension, and the first fused operator is any one of the N fused operators.

It should be understood that, when left hand side matrices of a plurality of matrix multiplication calculations performed by using a fused operator have a same dimension, and right hand side matrices of the plurality of matrix multiplication calculations performed by using the fused operator have a same dimension, a standard fused GEMM calculation may be performed, so that calculation time can be shortened, to improve calculation efficiency.

This embodiment of this application provides the model optimization method, so that a fused calculation can be performed on a plurality of matrix multiplications whose dimensions match, to reduce a quantity of kernel function scheduling times to optimize model performance and improve calculation efficiency.

With reference to the first aspect, in some implementations of the first aspect, the method further includes: if a dimension of a first matrix is less than a dimension of a second matrix, enabling, through padding, the dimension of the first matrix to reach a dimension that is the same as the dimension of the second matrix, where the first matrix and the second matrix are left hand side matrices in a first fused group, and the second matrix is a matrix having a largest dimension in left hand side matrices in the first fused group; or the first matrix and the second matrix are right hand side matrices in the first fused group, and the second matrix is a matrix having a largest dimension in right hand side matrices in the first fused group; and the first fused group includes the plurality of matrix multiplication calculations performed by using the first fused operator.

It should be understood that both the first matrix and the second matrix may be left hand side matrices in the first fused group, and the second matrix is the matrix having the largest dimension in the left hand side matrices in the first fused group. Alternatively, both the first matrix and the second matrix may be right hand side matrices in the first fused group, and the second matrix is the matrix having the largest dimension in the right hand side matrices in the first fused group.

For example, the left hand side matrices in the first fused group include only the first matrix and the second matrix, the dimension of the first matrix is a₁ × b₁ × c₁, the dimension of the second matrix is a₁ × b₁ × c₂, and c₁ is less than c₂. In this embodiment of this application, the first matrix may be padded, so that both the dimension of the first matrix and the dimension of the second matrix are a₁ × b₁ × c₂ , thereby facilitating a standard fused GEMM calculation, to improve calculation efficiency. Optionally, a zero-padding (zero-padding) technology may be used to pad the first matrix with zeros to form a matrix whose dimension is a₁ × b₁ × c₂. In this way, a standard fused GEMM calculation can be completed.

It should be understood that this embodiment of this application also supports a fused GEMM calculation without padding of the first matrix. Optionally, in this embodiment of this application, a tuning (tuning) technology may be used to compare calculation time of the technical solution of the standard fused matrix multiplication calculation with padding with calculation time of the technical solution of the fused matrix multiplication calculation without padding, to select a solution with shortest calculation time, in other words, tuning is used to choose whether to pad a hand side matrix.

This embodiment of this application provides the model optimization method, so that padding can be performed for operand matrices, of a plurality of matrix multiplication calculations, whose dimensions do not match, to complete a standard fused GEMM calculation to improve calculation efficiency.

With reference to the first aspect, in some implementations of the first aspect, the method further includes: determining a plurality of second matrix multiplication calculations based on a first matrix multiplication calculation, where the first matrix multiplication calculation is a matrix multiplication calculation performed by using any one of the M operators; performing the plurality of second matrix multiplication calculations based on at least one second fused operator; and adding calculation results of the plurality of second matrix multiplication calculations.

The second fused operator is one of the N fused operators, and is used to perform at least one second matrix multiplication calculation.

Optionally, in this embodiment of this application, the plurality of second matrix multiplication calculations may be determined based on the first matrix multiplication calculation. For example, if a left hand side matrix of the first matrix multiplication calculation is A, a right hand side matrix of the first matrix multiplication calculation is B, and A is obtained by concatenating (concat) three matrices A₁, A₂, and A₃, the first matrix multiplication calculation may be split into three second matrix multiplication calculations. Left hand side matrices of the three second matrix multiplication calculations are A₁, A₂, and A₃ respectively, and share a right hand side matrix B. The at least one second fused operator may be determined based on the plurality of matrix multiplication calculations in the first model file except the first matrix multiplication calculation and the plurality of second matrix multiplication calculations, and each second fused operator is used to perform at least one second matrix multiplication calculation. A kernel function is called to execute the at least one second fused operator, so that the calculation results of the plurality of second matrix multiplication calculations can be obtained. The calculation results of the plurality of second matrix multiplication calculations are added, so that equivalence between the first matrix multiplication calculation and the plurality of second matrix multiplication calculations can be ensured.

Optionally, the first matrix multiplication calculation may be split into the plurality of second matrix multiplication calculations based on a requirement for performing a standard fused GEMM calculation. For example, a MatMul 1, a MatMul 2, and a MatMul 3 belong to a same fused group, in other words, the MatMul 1, the MatMul 2, and the MatMul 3 are performed by using one fused operator. The MatMul 1, the MatMul 2, and the MatMul 3 share a right hand side matrix W, and respectively have left hand side matrices E_{Q}, E_{K}, and E_{V}. Dimensions of E_{Q}, E_{K}, and E_{V} are 1×8×768, and a dimension of W is 1×2304×256. In this embodiment of this application, the right hand side matrix W may be split into W_{Q}, W_{K}, and W_{V} based on the 2^{nd} dimension. Dimensions of W_{Q}, W_{K}, and W_{V} are 1×768×256. To be specific, in this case, a left hand side matrix of the MatMul 1 is E_{Q}, and a right hand side matrix of the MatMul 1 is W_{Q}; a left hand side matrix of the MatMul 2 is E_{K}, and a right hand side matrix of the MatMul 2 is W_{K}; and a left hand side matrix of the MatMul 3 is E_{V}, and a right hand side matrix of the MatMul 3 is W_{V}. Then, a fused calculation may be performed on the MatMul 1, the MatMul 2, and the MatMul 3. Finally, an add (add) operator with higher calculation efficiency may be introduced to ensure calculation equivalence.

This embodiment of this application provides the model optimization method, so that splitting can be performed for operand matrices, of a plurality of matrix multiplication calculations, whose dimensions do not match, to complete a standard fused GEMM calculation to improve calculation efficiency.

With reference to the first aspect, in some implementations of the first aspect, the determining a plurality of second matrix multiplication calculations based on a first matrix multiplication calculation includes: splitting the first matrix multiplication calculation into the plurality of second matrix multiplication calculations based on a dimension of the left hand side matrix or a dimension of the right hand side matrix in the first matrix multiplication calculation.

In this embodiment of this application, the first matrix multiplication calculation may be split into the plurality of second matrix multiplication calculations based on a requirement for performing a standard fused GEMM calculation. For example, a MatMul 1, a MatMul 2, and a MatMul 3 belong to a same fused group. The MatMul 1, the MatMul 2, and the MatMul 3 share a right hand side matrix W, and respectively have left hand side matrices E_{Q}, E_{K}, and E_{V}. Dimensions of E_{Q}, E_{K}, and E_{V} are 1×8×768, and a dimension of W is 1×2304×256. In this embodiment of this application, the right hand side matrix W may be split into W_{Q}, W_{K}, and W_{V} based on the 2^{nd} dimension. Dimensions of W_{Q}, W_{K}, and W_{V} are 1×768×256. To be specific, in this case, a left hand side matrix of the MatMul 1 is E_{Q}, and a right hand side matrix of the MatMul 1 is W_{Q}; a left hand side matrix of the MatMul 2 is E_{K}, and a right hand side matrix of the MatMul 2 is W_{K}; and a left hand side matrix of the MatMul 3 is E_{V}, and a right hand side matrix of the MatMul 3 is W_{V}.

This embodiment of this application provides the model optimization method, so that splitting can be performed for operand matrices, of a plurality of matrix multiplication calculations, whose dimensions do not match, to complete a standard fused GEMM calculation to improve calculation efficiency.

With reference to the first aspect, in some implementations of the first aspect, the first fused group includes at least two different left hand side matrices, or the first fused group includes at least two different right hand side matrices.

In this embodiment of this application, left hand side matrices or right hand side matrices of a plurality of matrix multiplication calculations in a fused group may be the same or may be different, and dimensions of the hand side matrices are allowed to be inconsistent. This can adapt to a plurality of scenarios, so that models in more scenarios are optimized.

With reference to the first aspect, in some implementations of the first aspect, the AI application deploys the second model file on a cloud server of the AI application after receiving the second model file.

It should be understood that the optimized second model file may be deployed on a hardware device in an end scenario, an edge scenario, a cloud scenario, or the like.

This embodiment of this application provides the model optimization method, so that a fused calculation can be performed on a plurality of matrix multiplications, to reduce a quantity of kernel function scheduling times to optimize model performance.

According to a second aspect, a model optimization apparatus is provided. The apparatus includes: a receiving module, configured to receive optimization request information entered by a user or sent by an artificial intelligence AI application, where the optimization request information includes a first model file, the first model file includes M operators, each operator is used to perform one matrix multiplication calculation, each operator corresponds to one kernel function, and M is a positive integer; a processing module, configured to generate a second model file based on the first model file, where the second model file includes N fused operators, each fused operator is used to perform at least two matrix multiplication calculations, each fused operator corresponds to one kernel function, N is a positive integer, and N<M; and a sending module, configured to provide the second model file for the user or send the second model file to the AI application.

With reference to the second aspect, in some implementations of the second aspect, the first model file is a model file of a trained AI model.

With reference to the second aspect, in some implementations of the second aspect, any matrix multiplication calculation performed by using each fused operator does not depend on a calculation result of another matrix multiplication calculation performed by using the same fused operator.

With reference to the second aspect, in some implementations of the second aspect, that each operator is used to perform one matrix multiplication calculation includes: each operator is used to perform a matrix multiplication calculation between a left hand side matrix and a right hand side matrix.

With reference to the second aspect, in some implementations of the second aspect, the processing module is further configured to generate the second model file based on a dimension of a left hand side matrix or a dimension of a right hand side matrix in the first model file.

With reference to the second aspect, in some implementations of the second aspect, left hand side matrices of a plurality of matrix multiplication calculations performed by using a first fused operator have a same dimension, right hand side matrices of the plurality of matrix multiplication calculations performed by using the first fused operator have a same dimension, and the first fused operator is any one of the N fused operators.

With reference to the second aspect, in some implementations of the second aspect, the processing module is further configured to: if a dimension of a first matrix is less than a dimension of a second matrix, enable, through padding, the dimension of the first matrix to reach a dimension that is the same as the dimension of the second matrix, where the first matrix and the second matrix are left hand side matrices in a first fused group, and the second matrix is a matrix having a largest dimension in left hand side matrices in the first fused group; or the first matrix and the second matrix are right hand side matrices in the first fused group, and the second matrix is a matrix having a largest dimension in right hand side matrices in the first fused group; and the first fused group includes the plurality of matrix multiplication calculations performed by using the first fused operator.

With reference to the second aspect, in some implementations of the second aspect, the processing module is further configured to: determine a plurality of second matrix multiplication calculations based on a first matrix multiplication calculation, where the first matrix multiplication calculation is a matrix multiplication calculation performed by using any one of the M operators; perform the plurality of second matrix multiplication calculations based on at least one second fused operator; and add calculation results of the plurality of second matrix multiplication calculations.

With reference to the second aspect, in some implementations of the second aspect, the processing module is specifically configured to split the first matrix multiplication calculation into the plurality of second matrix multiplication calculations based on a dimension of the left hand side matrix or a dimension of the right hand side matrix in the first matrix multiplication calculation.

With reference to the second aspect, in some implementations of the second aspect, the first fused group includes at least two different left hand side matrices, or the first fused group includes at least two different right hand side matrices.

With reference to the second aspect, in some implementations of the second aspect, the AI application deploys the second model file on a cloud server of the AI application after receiving the second model file.

A beneficial effect of any one of the second aspect or the possible implementations of the second aspect corresponds to the beneficial effect of any one of the first aspect or the possible implementations of the first aspect. This is not described herein again.

According to a third aspect, this application provides a computing device cluster, including at least one computing device. Each computing device includes a processor and a memory. A processor of the at least one computing device is configured to execute instructions stored in a memory of the at least one computing device, to enable the computing device cluster to perform the method in any one of the first aspect or the possible implementations of the first aspect.

Optionally, the processor may be a general purpose processor, and may be implemented by using hardware or software. When the processor is implemented by using hardware, the processor may be a logic circuit, an integrated circuit, or the like. When the processor is implemented by using software, the processor may be a general purpose processor, and is implemented by reading software code stored in the memory. The memory may be integrated into the processor, or may be located outside the processor and independently exist.

According to a fourth aspect, a chip is provided. The chip obtains instructions and executes the instructions to implement the method in any one of the first aspect or the implementations of the first aspect.

Optionally, as an implementation, the chip includes a processor and a data interface. The processor reads, through the data interface, instructions stored in a memory, to perform the method in any one of the first aspect or the implementations of the first aspect.

Optionally, as an implementation, the chip may further include the memory. The memory stores the instructions. The processor is configured to execute the instructions stored in the memory. When the instructions are executed, the processor is configured to perform the method in any one of the first aspect or the implementations of the first aspect.

According to a fifth aspect, a computer program product including instructions is provided. When the instructions are run by a computing device cluster, the computing device cluster is enabled to perform the method in any one of the first aspect or the implementations of the first aspect.

According to a sixth aspect, a computer-readable storage medium is provided, including computer program instructions. When the computer program instructions are executed by a computing device cluster, the computing device cluster performs the method in any one of the first aspect or the implementations of the first aspect.

As an example, the computer-readable storage medium includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

Optionally, as an implementation, the storage medium may be specifically a nonvolatile storage medium.

### BRIEF DESCRIPTION OF DRAWINGS

FIG. 1 is an example flowchart of AI application development according to an embodiment of this application;
FIG. 2 is a diagram of a running architecture of a compiler according to an embodiment of this application;
FIG. 3 is a diagram of an application scenario of model optimization according to an embodiment of this application;
FIG. 4 is a diagram of an application scenario of software optimization according to an embodiment of this application;
FIG. 5 is a diagram of another application scenario of software optimization according to an embodiment of this application;
FIG. 6 is an example flowchart of a model optimization method according to an embodiment of this application;
FIG. 7 is a diagram of a 1:n matrix multiplication fusion scenario according to an embodiment of this application;
FIG. 8 is a diagram of a 1:n matrix multiplication fusion procedure according to an embodiment of this application;
FIG. 9 is a diagram of an n:n matrix multiplication fusion scenario according to an embodiment of this application;
FIG. 10 is a diagram of an n:n matrix multiplication fusion procedure according to an embodiment of this application;
FIG. 11 is a diagram of another matrix multiplication fusion procedure according to an embodiment of this application;
FIG. 12 is a diagram of matrix padding according to an embodiment of this application;
FIG. 13 is a diagram of another matrix multiplication fusion scenario according to an embodiment of this application;
FIG. 14 is a diagram of another matrix multiplication fusion procedure according to an embodiment of this application;
FIG. 15 is a diagram of an application scenario of a model optimization method according to an embodiment of this application;
FIG. 16 is a diagram of another application scenario of a model optimization method according to an embodiment of this application;
FIG. 17 is a block diagram of a model optimization apparatus according to an embodiment of this application;
FIG. 18 is a diagram of an architecture of a computing device according to an embodiment of this application;
FIG. 19 is a diagram of an architecture of a computing device cluster according to an embodiment of this application; and
FIG. 20 is a diagram in which a computing device 1700A is connected to a computing device 1700B via a network according to an embodiment of this application.

### DESCRIPTION OF EMBODIMENTS

Deep learning technologies are continuously applied to various industries, and application of a transformer (transformer) network model based on an attention mechanism in the natural language field is especially prominent. A biggest performance bottleneck of running this series of models on hardware is matrix multiplication (matrix multiply, MatMul) calculations of the models. A bidirectional encoder representation from transformers (bidirectional encoder representation from transformers, BERT) model is used as an example. When the model is run on graphics processing unit (graphics processing unit, GPU) V100 hardware, 398 kernel function calculations need to be performed, and there are 96 general matrix multiplication (general matrix multiply, GEMM) calculations in total, whose calculation time accounts for more than 80% of total calculation time.

Currently, a known solution is that one MatMul operator corresponds to one GEMM function. One BERT model has 96 MatMuls. A large quantity of MatMuls increase load of low-level kernel function calculation scheduling. However, when an operand of the MatMul is a small matrix, a stream multiprocessing (stream multiprocessing, SM) module of a GPU chip may not be fully utilized.

The following describes technical solutions in embodiments of this application with reference to accompanying drawings. Clearly, the described embodiments are some but not all of embodiments of this application. All other embodiments obtained by a person of ordinary skill in the art based on embodiments of this application without creative efforts shall fall within the protection scope of this application.

Aspects, embodiments, or features are presented in this application by describing a system including a plurality of devices, components, modules, or the like. It should be appreciated and understood that, each system may include another device, component, module, or the like, and/or may not include all devices, components, modules, or the like discussed with reference to an accompanying drawing. In addition, a combination of these solutions may be used.

In addition, in embodiments of this application, terms such as "example" and "for example" are used to represent giving an example, an illustration, or a description. Any embodiment or design solution described as an "example" in this application should not be explained as being more preferred or having more advantages than another embodiment or design solution. Exactly, the term "example" is used to present a concept in a specific manner.

In embodiments of this application, "relevant (corresponding, relevant)" and "corresponding (corresponding)" may sometimes be interchangeably used. It should be noted that meanings expressed by the terms are consistent when a difference between the terms is not emphasized.

The service scenario described in embodiments of this application is intended to describe the technical solutions in embodiments of this application more clearly, and does not constitute a limitation on the technical solutions provided in embodiments of this application. A person of ordinary skill in the art may learn that, with evolution of a network architecture and emergence of a new service scenario, the technical solutions provided in embodiments of this application are also applicable to a similar technical problem.

Reference to "an embodiment", "some embodiments", or the like described in this specification means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean reference to a same embodiment. Instead, the statements mean reference to "one or more but not all of embodiments", unless otherwise specifically emphasized in another manner. The terms "include", "comprise", "have", and their variants all mean "include but are not limited to", unless otherwise specifically emphasized in another manner.

In this application, "at least one" means one or more, and "a plurality of" means two or more. The term "and/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects. The expression "at least one of the following items (pieces)" or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

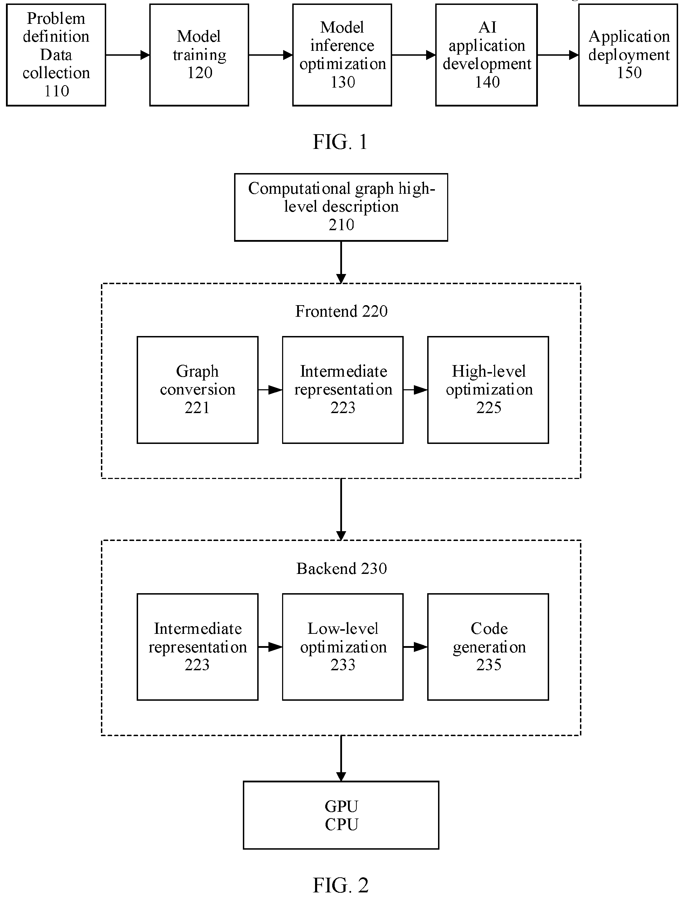

FIG. 1 is an example flowchart of AI application development according to an embodiment of this application.

For example, during artificial intelligence (artificial intelligence, AI) application development, first, a problem may be defined, and data may be collected 110 based on the to-be-resolved problem; and then, a model may be trained 120 based on the collected data. For example, the model may be trained by using TensorFlow, PyTorch, JAX, or another AI technology. JAX is a simplified library of TensorFlow. This application provides a MatMul fusion method based on AI compilation optimization, and relates to model inference optimization 130. For a trained model, a low-level function of the model may be optimized to improve overall inference performance of the model. After an optimized model is obtained, subsequent AI application development 140 may be performed, and then an application may be deployed 150. For example, the AI application may be deployed on a terminal or a cloud.

FIG. 2 is a diagram of a running architecture of a compiler according to an embodiment of this application.

A common compiler mainly includes a frontend (frontend) 220 and a backend (backend) 230. The frontend 220 includes graph conversion 221, an intermediate representation 223, and high-level optimization 225, and the backend 230 includes an intermediate representation 223, low-level optimization 233, and code generation 235.

A user first trains a model to obtain a computational graph high-level description 210 of the model, and then enters the graph high-level description 210 to the frontend 220 of the compiler. The computational graph high-level description 210 may be converted, through a graph conversion tool of the frontend 220, into an intermediate representation (intermediate representation, IR) 223 that can be recognized by the compiler. For the intermediate representation 223, at the frontend 220, high-level optimization (high-level optimization) 225 unrelated to target hardware may be completed; and at the backend 230, low-level optimization (low-level optimization) 233 related to the hardware may be completed, and executable code of target hardware such as a central processing unit (central processing unit, CPU) or a graphics processing unit (graphics processing unit, GPU) may be finally generated.

In this embodiment of this application, MatMul fusion optimization may be completed through graph optimization and operator optimization based on an AI compiler technology, to accelerate model inference performance. In this embodiment of this application, MatMul fusion optimization is mainly completed in two phases. In a first phase, a graph optimization technology is used in the high-level optimization 225 phase of the frontend 220 to find suitable MatMuls that can be fused. In a second phase, in the low-level optimization 233 phase of the backend 230, GEMM operator fusion is implemented to complete a fused calculation of a plurality of MatMuls, and a padding (padding) or tuning (tuning) technology is used to complete performance tuning.

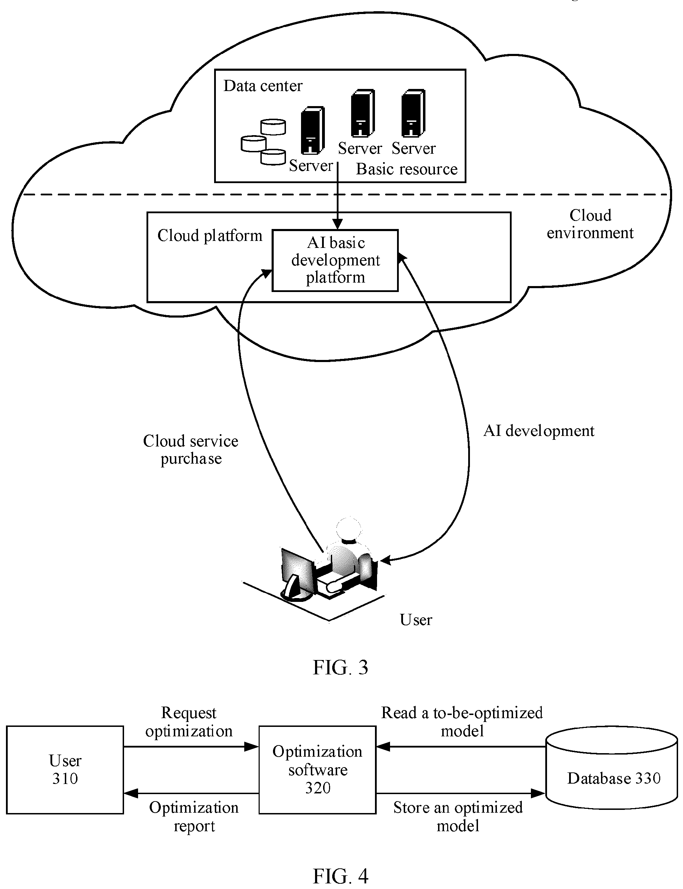

FIG. 3 is a diagram of an application scenario of model optimization according to an embodiment of this application.

An AI basic development platform of a public cloud is a platform as a service (platform as a service, PaaS) cloud service in a cloud platform, and is a software platform provided for a user (also referred to as a tenant, an AI developer, or the like) based on a large quantity of basic resources and software capabilities owned by a service provider of the public cloud to assist in AI model construction, training, optimization, and deployment, and AI application development and deployment. As shown in FIG. 3, a form of an interaction between the user and the AI basic development platform mainly includes: The user logs in to the cloud platform through a client web page, and selects and purchases a cloud service of the AI basic development platform on the cloud platform. After the purchase, the user can perform full-process AI development based on a function provided by the AI basic development platform.

It should be understood that the AI basic development platform may provide a model optimization service by using the model optimization method in embodiments of this application. The user sends optimization request information to the AI basic development platform. The optimization request information may be a to-be-optimized first model file uploaded by the user to the AI basic development platform. The AI basic development platform may optimize the first model file to generate an optimized second model file, and then return the optimized second model file to the user.

FIG. 4 is a diagram of an application scenario of software optimization according to an embodiment of this application.

Optimization software 320 may run in a local development environment of a user 310 or may serve as an application programming interface (application programming interface, API) service of a public cloud. For example, the user 310 may invoke an interface of the optimization software 320 to request optimization, and a to-be-optimized first model file may be transferred from a database 330 to the optimization software 320 for optimization, to obtain an optimized second model file. The optimized second model file may be stored in the database 330. Optionally, the optimization software 320 may further return an optimization report to the user 310. It should be understood that the database 330 may be any resource having a storage function, for example, a cloud or a memory. The optimization software 320 may provide a model optimization service by using the model optimization method provided in embodiments of this application.

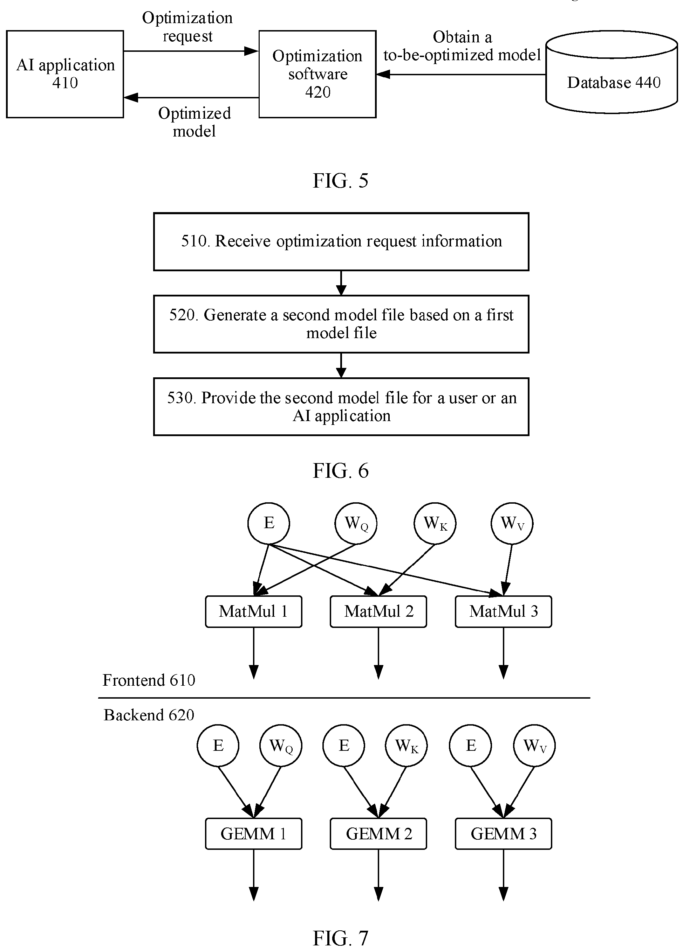

This embodiment of this application may be used in a model inference optimization 130 phase of the optimization software, and the optimized second model file may be deployed on a hardware device in an end scenario, an edge scenario, a cloud scenario, or the like. FIG. 5 is a diagram of another application scenario of software optimization according to an embodiment of this application. Optimization software 420 is directly installed on hardware on which an AI application is finally deployed. An AI application 410 sends optimization request information to the optimization software 420, to request to optimize a model. The optimization software 420 obtains a to-be-optimized first model file from a database 440 for optimization, and then returns an optimized second model file to the AI application 410. The optimization software 420 may provide a model optimization service by using the model optimization method provided in embodiments of this application.

FIG. 6 is an example flowchart of a model optimization method according to an embodiment of this application.

510. Receive optimization request information.

The optimization request information entered by a user or sent by an AI application is received. The optimization request information includes a first model file, the first model file includes M operators, each operator is used to perform one matrix multiplication calculation, each operator corresponds to one kernel function, and M is a positive integer.

For example, the first model file may be a computational graph high-level description of a model, or may be an intermediate representation (intermediate representation, IR) of a model.

Optionally, each operator may be used to perform a matrix multiplication calculation between a left hand side matrix and a right hand side matrix.

520. Generate a second model file based on the first model file.

The second model file is generated based on the first model file. The second model file includes N fused operators, each fused operator is used to perform at least two matrix multiplication calculations, each fused operator corresponds to one kernel function, N is a positive integer, and N<M.

Optionally, in this embodiment of this application, the kernel function corresponding to each fused operator may be used to complete a fused calculation of a plurality of MatMuls by invoking an open-source third-party library, or may be used to complete a fused calculation of a plurality of MatMuls by using user-defined function code that is locally compiled by a user. This is not limited in this application.

Optionally, in this embodiment of this application, first, a plurality of matrix multiplication calculations in the first model file may be traversed, and any plurality of matrix multiplication calculations may be fused, to be specific, the any plurality of matrix multiplication calculations may be performed by using one fused operator.

Optionally, in this embodiment of this application, first, a plurality of obtained matrix multiplication calculations may be traversed, a plurality of matrix multiplication calculations unrelated in a time sequence may be determined to be grouped into one fused group, and the matrix multiplication calculations in the fused group may be performed by using one fused operator.

Optionally, in this embodiment of this application, first, a plurality of obtained matrix multiplication calculations may be traversed, matrix multiplication calculations whose left hand side matrices have a same dimension or whose right hand side matrices have a same dimension may be grouped into one fused group, and the matrix multiplication calculations in the fused group may be performed by using one fused operator.

Optionally, in this embodiment of this application, matrix multiplication calculations unrelated in a time sequence and whose left hand side matrices have a same dimension or whose right hand side matrices have a same dimension may be grouped into one fused group, and then the matrix multiplication calculations in the fused group may be performed by using one fused operator.

For example, the first model file includes operators 1 to 6, and the operators are used to respectively perform a MatMul 1 to a MatMul 6. The MatMul 1, the MatMul 2, the MatMul 5, and the MatMul 6 have no dependency relationship in a time sequence, to be specific, any MatMul calculation in the MatMul 1, the MatMul 2, the MatMul 5, and the MatMul 6 does not depend on a calculation result of another MatMul calculation. In this case, the MatMul 1, the MatMul 2, the MatMul 5, and the MatMul 6 may be grouped into one fused group, and the MatMul 1, the MatMul 2, the MatMul 5, and the MatMul 6 may be fused for calculation by one operator.

530. Provide the second model file for the user or the AI application.

An optimized AI model is returned to the user or the AI application.

FIG. 7 is a diagram of a 1:n matrix multiplication fusion scenario according to an embodiment of this application.

In this embodiment of this application, a ratio of a quantity of left hand side (left hand side, LHS) matrices to a quantity of right hand side (right hand side, RHS) matrices in matrix multiplication fusion is 1:n, and n is a positive integer. For example, n=3, to be specific, three MatMuls are to be fused. The three MatMuls include a MatMul 1, a MatMul 2, and a MatMul 3. The MatMul 1, the MatMul 2, and the MatMul 3 share a left hand side matrix E, and respectively have right hand side matrices W_{Q}, W_{K}, and W_{V}. Output of the MatMul 1 is output 1, output of the MatMul 2 is output 2, and output of the MatMul 3 is output 3. output 1 = MatMul(E, W_{Q}), output 2 = MatMul(E, W_{K}), and output 3 = MatMul(E, W_{V}).

It should be understood that a dimension of E is b×n×m, a dimension of W_{Q} is b× m× k, a dimension of the output 1 is b×n×k, and b, m, and k are positive integers. When b is greater than 1, MatMul calculations may be performed in a batch (batch) processing manner. Accelerated linear algebra (accelerated linear algebra, XLA) in the conventional technology does not support a fused MatMul calculation. Each MatMul at a frontend 610 corresponds to one GEMM function, to be specific, the MatMul 1 corresponds to a GEMM 1, the MatMul 2 corresponds to a GEMM 2, and the MatMul 3 corresponds to a GEMM 3. At a backend 620, the GEMM functions are directly called for calculation.

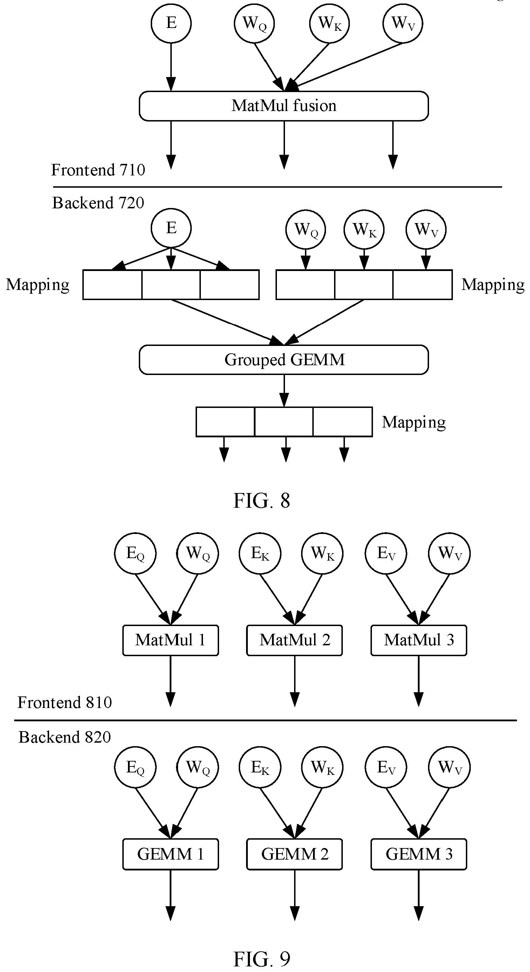

FIG. 8 is a diagram of a 1:n matrix multiplication fusion procedure according to an embodiment of this application. FIG. 8 corresponds to FIG. 7. In this embodiment of this application, first, a MatMul computational graph shown at the frontend 610 in FIG. 7 is traversed, and a fused calculation is performed on any plurality of MatMuls. It should be understood that the fused calculation refers to calling one corresponding kernel function to perform the plurality of MatMul calculations.

Optionally, in this embodiment of this application, a MatMul computational graph shown at the frontend 610 in FIG. 7 may be traversed, MatMuls that meet a fusion condition may be marked, and then the MatMuls that meet the fusion condition may be grouped into one fused group. For example, the fusion condition may be that MatMul calculations in a same fused group are unrelated in a time sequence, in other words, do not depend on each other in calculation. The fusion condition may alternatively be that dimensions of left hand side matrices or dimensions of right hand side matrices of MatMul calculations in a same fused group are the same. The fusion condition may alternatively be that MatMul calculations in a same fused group are unrelated in a time sequence, and dimensions of left hand side matrices or dimensions of right hand side matrices of the MatMul calculations in the same fused group are the same.

For example, if the MatMul 1, the MatMul 2, and the MatMul 3 in FIG. 7 meet the fusion condition, in this embodiment of this application, at a frontend 710, the MatMul 1, the MatMul 2, and the MatMul 3 may be grouped into one fused group; and then, at a backend 720, memory mapping may be performed on the input left hand side matrix E and the input right hand side matrices W_{Q}, W_{K}, and W_{V} of operators, and a user-defined grouped GEMM function may be called to complete the matrix calculations and then results may be mapped to three output nodes. It should be understood that the user-defined grouped GEMM in this embodiment of this application may implement a general matrix multiplication of a plurality of matrices of a same size or different sizes. In this embodiment of this application, the MatMul 1, the MatMul 2, and the MatMul 3 are merely an example, and more MatMuls may alternatively be fused. The quantity should not be understood as a limitation on this application.

For example, in this embodiment of this application, the grouped GEMM function may be used to complete a fused calculation of a plurality of MatMuls by invoking an open-source third-party library, or may be used to complete a fused calculation of a plurality of MatMuls by using user-defined function code that is locally compiled by a user.

Optionally, the left hand side matrix E may be mapped to only one memory area. In FIG. 8, mapping the left hand side matrix E to three memory areas is merely an example, and should not be understood as a limitation on this application.

FIG. 9 is a diagram of an n:n matrix multiplication fusion scenario according to an embodiment of this application.

In this embodiment of this application, left hand side matrices or right hand side matrices of fused MatMuls may be different. For example, a ratio of a quantity of left hand side matrices to a quantity of right hand side matrices in matrix multiplication fusion is n:n, and n is a positive integer. For example, n=3, to be specific, three MatMuls are to be fused at a frontend 810. The three MatMuls include a MatMul 1, a MatMul 2, and a MatMul 3. A left hand side matrix of the MatMul 1 is E_{Q}, and a right hand side matrix of the MatMul 1 is W_{Q}; a left hand side matrix of the MatMul 2 is E_{K}, and a right hand side matrix of the MatMul 2 is W_{K}; and a left hand side matrix of the MatMul 3 is E_{V}, and a right hand side matrix of the MatMul 3 is W_{V}.

In an existing technical solution, each MatMul at the frontend 810 corresponds to one GEMM function, to be specific, the MatMul 1 corresponds to a GEMM 1, the MatMul 2 corresponds to a GEMM 2, and the MatMul 3 corresponds to a GEMM 3. At a backend 820, the GEMM functions are directly called for calculation.

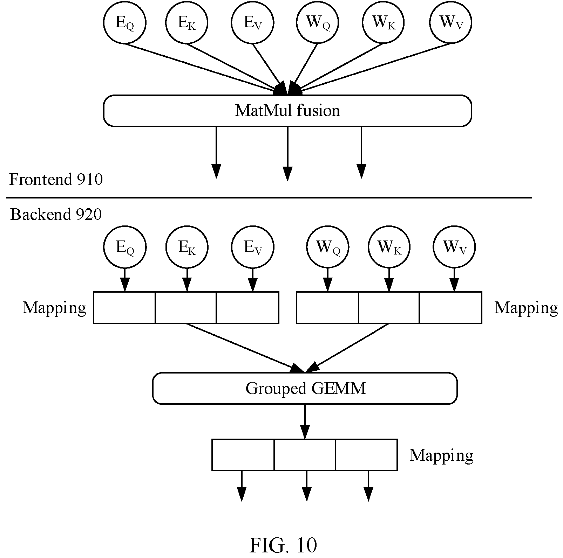

FIG. 10 is a diagram of an n:n matrix multiplication fusion procedure according to an embodiment of this application. FIG. 10 corresponds to FIG. 9. In this embodiment of this application, first, a MatMul computational graph shown at the frontend 810 in FIG. 9 may be traversed, and a fused calculation may be performed on any plurality of MatMuls. It should be understood that the fused calculation refers to calling, by using a fused operator, one corresponding kernel function to perform the plurality of MatMul calculations.

Optionally, in this embodiment of this application, a MatMul computational graph shown at the frontend 810 in FIG. 9 may be traversed, MatMuls that meet a fusion condition may be marked, and then the MatMuls that meet the fusion condition may be grouped into one fused group. For example, the fusion condition may be that MatMul calculations in a same fused group are unrelated in a time sequence, in other words, do not depend on each other in calculation. The fusion condition may alternatively be that dimensions of left hand side matrices or dimensions of right hand side matrices of MatMul calculations in a same fused group are the same. The fusion condition may alternatively be that MatMul calculations in a same fused group are unrelated in a time sequence, and dimensions of left hand side matrices or dimensions of right hand side matrices of the MatMul calculations in the same fused group are the same.

For example, if the MatMul 1, the MatMul 2, and the MatMul 3 in FIG. 9 meet the fusion condition, in this embodiment of this application, at a frontend 910, the MatMul 1, the MatMul 2, and the MatMul 3 may be grouped into one fused group; and then, at a backend 920, memory mapping may be performed on the input left hand side matrices E_{Q}, E_{K}, and E_{V} and the input right hand side matrices W_{Q}, W_{K}, and W_{V} of operators, and a user-defined grouped GEMM function may be called to complete the matrix calculations and then results may be mapped to three output nodes. It should be understood that the user-defined grouped GEMM in this embodiment of this application may implement a general matrix multiplication of a plurality of matrices of a same size or different sizes. In this embodiment of this application, the MatMul 1, the MatMul 2, and the MatMul 3 are merely an example, and more MatMuls may alternatively be fused. The quantity should not be understood as a limitation on this application.

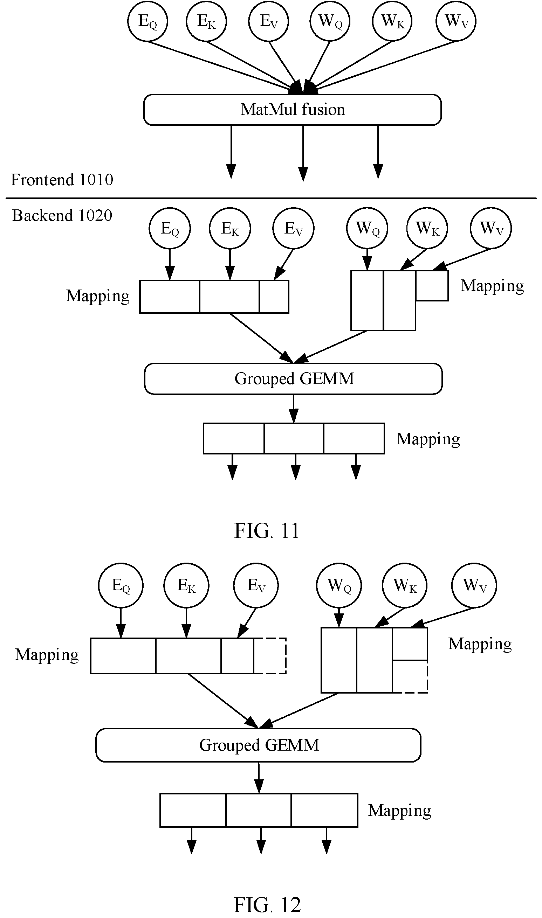

FIG. 11 is a diagram of another matrix multiplication fusion procedure according to an embodiment of this application.

In this embodiment of this application, all of left hand side matrices or right hand side matrices of fused MatMuls may have different dimensions. For example, a fused group at a frontend 1010 includes three MatMuls, and the three MatMuls include a MatMul 1, a MatMul 2, and a MatMul 3 (not drawn in the example diagram). A left hand side matrix of the MatMul 1 is E_{Q}, and a right hand side matrix of the MatMul 1 is W_{Q}; a left hand side matrix of the MatMul 2 is E_{K}, and a right hand side matrix of the MatMul 2 is W_{K}; and a left hand side matrix of the MatMul 3 is E_{V}, and a right hand side matrix of the MatMul 3 is W_{V}. Dimensions of E_{Q} and E_{K} are 1×128×256, a dimension of E_{V} is 1×128×128, dimensions of W_{Q} and W_{K} are 1×256×128 , and a dimension of W_{V} is 1×128×128.

As shown in FIG. 11, in this embodiment of this application, a grouped GEMM calculation may be directly performed at a backend 1020. Optionally, as shown in FIG. 12, in this embodiment of this application, a zero-padding (zero-padding) technology may be used at the backend 1020 to pad E_{V} with zeros to form a matrix whose dimension is 1×128×256 and pad W_{V} to form a matrix whose dimension is 1×256×128. In this way, a standard grouped GEMM calculation can be completed. It should be understood that, when left hand side matrices of a plurality of MatMuls belonging to one fused group have a same dimension, and right hand side matrices of the plurality of MatMuls belonging to the fused group have a same dimension, a standard GEMM calculation may be performed, so that calculation time can be shortened, to improve calculation efficiency.

Optionally, in this embodiment of this application, a tuning (tuning) technology may be used to compare calculation time of the solution of directly performing the grouped GEMM calculation at the backend 1020 as shown in FIG. 11 with calculation time of the solution of performing the standard grouped GEMM calculation as shown in FIG. 12, to select an optimal solution. In other words, tuning is used to choose whether to perform zero-padding on a hand side matrix.

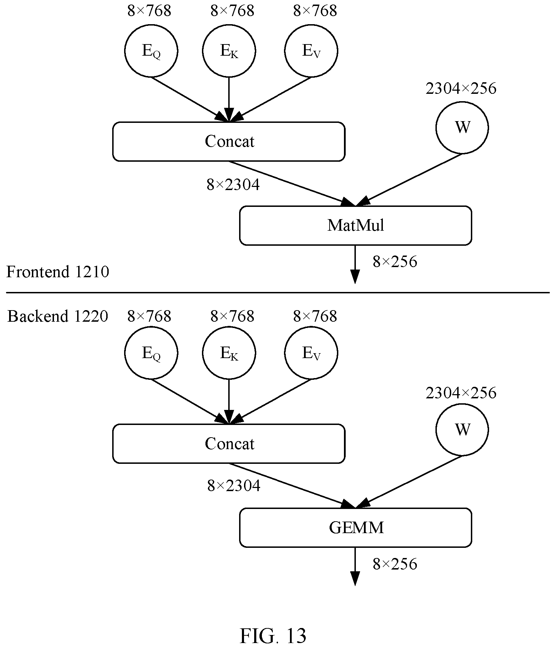

FIG. 13 is a diagram of another matrix multiplication fusion scenario according to an embodiment of this application.

In this embodiment of this application, a ratio of a quantity of LHS matrices to a quantity of RHS matrices is n:1. For example, n=3. Three MatMuls include a MatMul 1, a MatMul 2, and a MatMul 3. The MatMul 1, the MatMul 2, and the MatMul 3 share a right hand side matrix W, and respectively have left hand side matrices E_{Q}, E_{K}, and E_{V}. For optimizing deep learning computation with automatic generation of graph substitutions (optimizing deep learning computation with automatic generation of graph substitutions, TASO), at a frontend 1210, a concat (concat) operator is introduced to concat the matrices E_{Q}, E_{K}, and E_{V} into a large matrix, and then a MatMul operator is called for calculation. Dimensions of E_{Q}, E_{K}, and E_{V} are 1×8×768, a dimension of a concated matrix is 1×8×2304, a dimension of W is 1×2304×256, and dimensions of the MatMul operator and GEMM output are 1×8×256. It should be understood that, in this embodiment of this application, the 1^{st} dimension of the matrix is 1, and is omitted for ease of drawing. The figure should not be understood as a limitation on this application.

For the TASO, the MatMul operator at the frontend 1210 corresponds to a GEMM function at a backend 1220. At the backend 1220, the GEMM function is directly called to calculate a result.

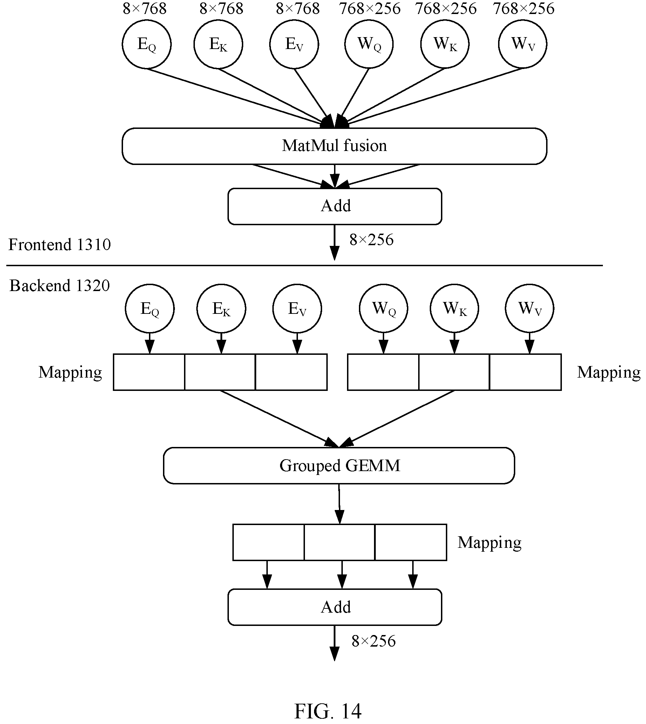

FIG. 14 is a diagram of another matrix multiplication fusion procedure according to an embodiment of this application. FIG. 14 corresponds to FIG. 13. In this embodiment of this application, at a frontend 1310, the concat operator may be removed to restore the MatMul 1, the MatMul 2, and the MatMul 3 (not drawn in the example diagram), and the right hand side matrix W may be split into W_{Q}, W_{K}, and W_{V} based on the 2^{nd} dimension. Dimensions of W_{Q}, W_{K}, and W_{V} are 1×768×256. Then, the MatMul 1, the MatMul 2, and the MatMul 3 may be grouped into one fused group. Finally, an add (add) operator with higher calculation efficiency may be introduced to ensure calculation equivalence.

Optionally, in this embodiment of this application, a fused MatMul calculation may be directly performed without splitting of the right hand side matrix W, or a fused MatMul calculation may be performed after a zero-padding technology is used to supplement dimensions of the left hand side matrices. This is not limited in this application.

In this embodiment of this application, at a backend 1320, memory mapping may be performed on the input left hand side matrices E_{Q}, E_{K}, and E_{V} and the input right hand side matrices W_{Q}, W_{K}, and W_{V} of operators, and a user-defined grouped GEMM function may be called to complete the matrix calculations and then results may be mapped to three output nodes. It should be understood that the user-defined grouped GEMM in this embodiment of this application may implement a general matrix multiplication of a plurality of matrices of a same size or different sizes. In this embodiment of this application, the MatMul 1, the MatMul 2, and the MatMul 3 are merely an example, and more MatMuls may alternatively be fused. The quantity should not be understood as a limitation on this application.

Optionally, if there is a reshape (reshape) operator or a transpose (transpose) operator before the fused MatMul calculation, the operator may also be removed. A hand side layout (layout) and whether transposition or the like is required are transferred to the backend 1320, and equivalent conversion is completed by using the grouped GEMM of the backend 1320. It should be understood that the hand side layout may determine a manner of placing the hand side matrices in a memory. For example, the hand side matrices are placed in the memory by row or by column.

It should be understood that, in this embodiment of this application, the 1^{st} dimension of the matrix is 1, and is omitted for ease of drawing. The figure should not be understood as a limitation on this application.

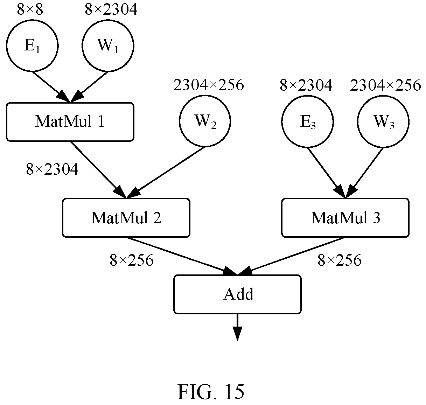

FIG. 15 is a diagram of an application scenario of a model optimization method according to an embodiment of this application.

In an actual service model, there are a relatively large quantity of complex dependent MatMuls. In this embodiment of this application, the MatMuls may be orchestrated based on two dimensions: a time sequence and space allocation. MatMuls depending on each other in the time sequence are isolated, and a space allocation area is formed in an isolation area. Space division orchestration may be performing sorting and fusion based on dimensions of the matrices, to be specific, MatMuls that have no dependency relationship in the time sequence are grouped into one fused group.

For example, in FIG. 15, a left hand side matrix of a MatMul 1 is E₁, and a right hand side matrix of the MatMul 1 is W₁; a left hand side matrix of a MatMul 2 is a calculation result of E₁ and W₁, and a right hand side matrix of the MatMul 2 is W₂; and a left hand side matrix of a MatMul 3 is E₃, and a right hand side matrix of the MatMul 3 is W₃. A dimension of E₁ is 1×8×8, dimensions of W₁ and E₃ are 1×8×2304, an output dimension of the MatMul 1 is 1×8×2304, output dimensions of the MatMul 2 and the MatMul 3 are 1×8×256, and dimensions of W₂ and W₃ are 1×2304×256. The MatMul 1 and the MatMul 2 have a dependency relationship in the time sequence and cannot be grouped into a same fused group. The MatMul 2 and the MatMul 3 have no dependency relationship in the time sequence and can be grouped into a same fused group to complete a fused MatMul calculation.

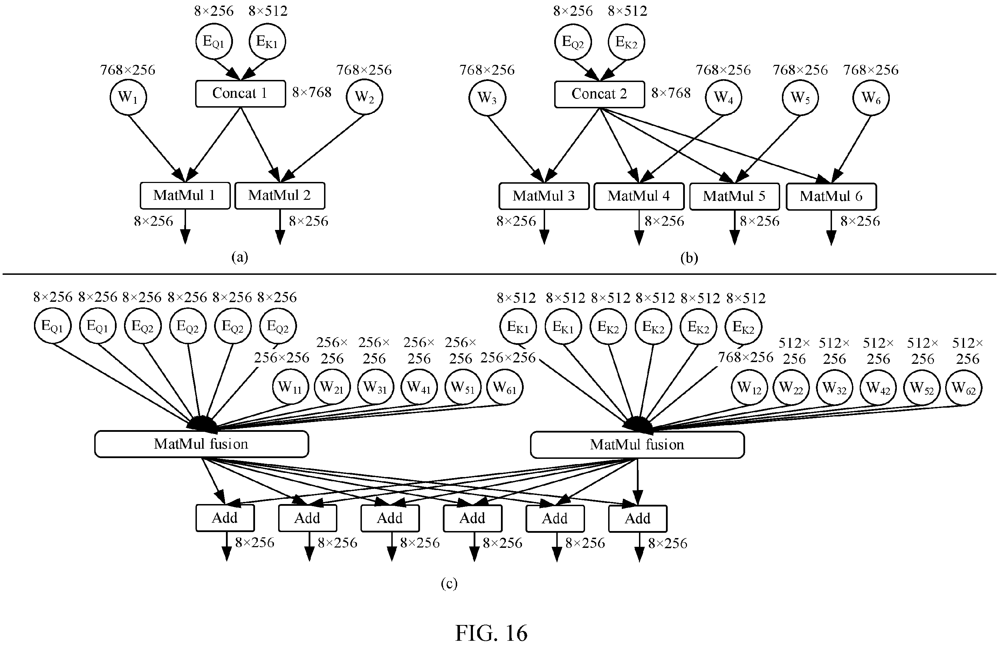

FIG. 16 is a diagram of another application scenario of a model optimization method according to an embodiment of this application.

In (a) in FIG. 16, a dimension of E_{Q1} is 1×8×256, a dimension of E_{K1} is 1×8×512, and dimensions of W₁ and W₂ are 1×768×256. E_{Q1} and E_{K1} are concated by using concat 1, and a concated result is used to respectively perform a MatMul 1 calculation with W₁ and perform a MatMul 2 calculation with W₂.

In (b) in FIG. 16, a dimension of E_{Q2} is 1×8×256, a dimension of E_{K2} is 1×8×512, and dimensions of W₃, W₄, W₅, and W₆ are 1×768×256. E_{Q2} and E_{K2} are concated by using concat 2, and a concated result is used to respectively perform a MatMul 3 calculation with W₃, perform a MatMul 4 calculation with W₄, perform a MatMul 5 calculation with W₅, and perform a MatMul 6 calculation with W₆.

In this embodiment of this application, (c) in FIG. 16 shows a fusion process of the MatMul calculations in (a) in FIG. 16 and (b) in FIG. 16. In this embodiment of this application, W₁ is split into W₁₁ and W₁₂ based on the 2^{nd} dimension of the matrix W₁, W₂ is split into W₂₁ and W₂₂ based on the 2^{nd} dimension of the matrix W₂, W₃ is split into W₃₁ and W₃₂ based on the 2^{nd} dimension of the matrix W₃, W₄ is split into W₄₁ and W₄₂ based on the 2^{nd} dimension of the matrix W₄, and W₅ is split into W₅₁ and W₅₂ based on the 2^{nd} dimension of the matrix W₅, and W₆ is split into W₆₁ and W₆₂ based on the 2^{nd} dimension of the matrix W₆. 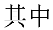 , W11, W21, W31, W41, W51 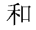 W61 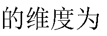 1x256x256, W12, W22, W32, W42, W52 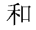 W62 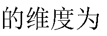 1x512x256_{∘} 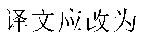 Dimensions of W11, W21, W31, W41, W51, and W61 are 1 × 256 × 256, and dimensions of W12, W22, W32, W42, W52, and W62 are 1 × 512×256.

In this embodiment of this application, a fused MatMul calculation may be performed on E_{Q1}, E_{Q2}, W₁₁, W₂₁, W₃₁, W₄₁, W₅₁, and W₆₁, and a fused MatMul calculation may be performed on E_{K1}, E_{K2}, W₁₂, W₂₂, W₃₂, W₄₂, W₅₂, and W₆₂. Finally, an add operator with higher calculation efficiency may be introduced to ensure calculation equivalence.

It should be understood that, in (c) in FIG. 16, to improve a speed of a fused matrix multiplication calculation, W₁, W₂, W₃, W₄, W₅, and W₆ are split to facilitate calculations with E_{Q1}, E_{Q2}, E_{K1}, and E_{K2}. Optionally, E_{Q1}, E_{Q2}, E_{K1}, E_{K2}, W₁, W₂, W₃, W₄, W₅, and W₆ may be directly fused without splitting of W₁, W₂, W₃, W₄, W₅, and W₆. For example, a fused MatMul calculation may be performed after a zero-padding technology is used to supplement the dimensions of E_{Q1}, E_{Q2}, E_{K1}, and E_{K2}. This is not limited in this application.

It should be understood that, in this embodiment of this application, the 1^{st} dimension of the matrix is 1, and is omitted for ease of drawing. The figure should not be understood as a limitation on this application.

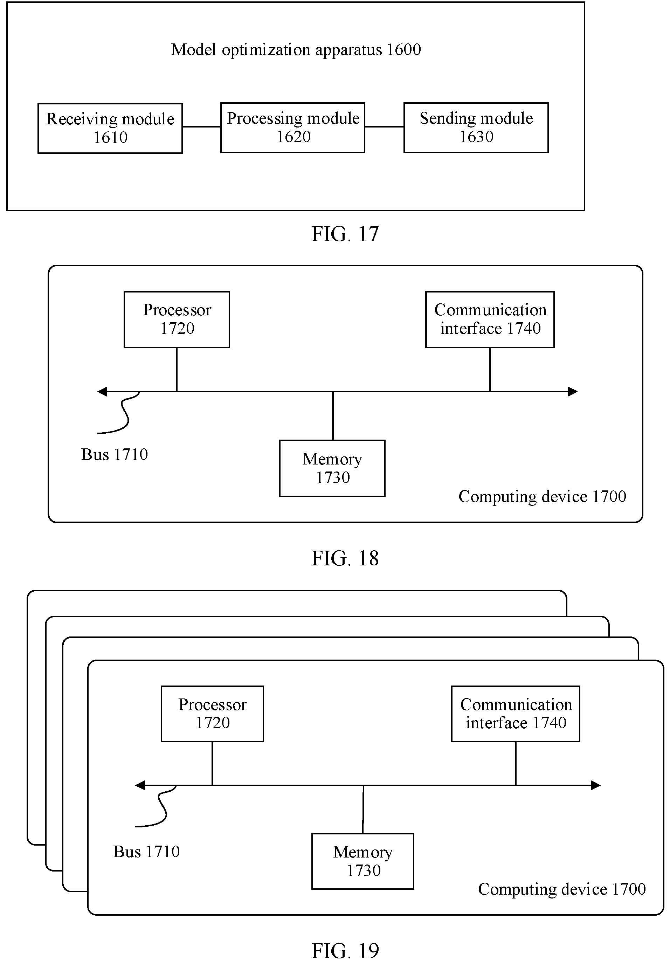

The foregoing describes, in detail with reference to FIG. 1 to FIG. 16, the model optimization method provided in embodiments of this application. The following describes apparatus embodiments of this application in detail with reference to FIG. 17 to FIG. 20. It should be understood that the descriptions of the method embodiments correspond to descriptions of the apparatus embodiments. Therefore, for a part that is not described in detail, refer to the foregoing method embodiments.

FIG. 17 is a block diagram of a model optimization apparatus 1600 according to an embodiment of this application.

The model optimization apparatus 1600 may be implemented by using software, hardware, or a combination thereof. The model optimization apparatus 1600 provided in this embodiment of this application may implement the method procedures shown in FIG. 1 to FIG. 16 in embodiments of this application. The model optimization apparatus 1600 includes a receiving module 1610, a processing module 1620, and a sending module 1630. The receiving module 1610 is configured to receive optimization request information entered by a user or sent by an artificial intelligence AI application, where the optimization request information includes a first model file, the first model file includes M operators, each operator is used to perform one matrix multiplication calculation, each operator corresponds to one kernel function, and M is a positive integer. The processing module 1620 is configured to generate a second model file based on the first model file, where the second model file includes N fused operators, each fused operator is used to perform at least two matrix multiplication calculations, each fused operator corresponds to one kernel function, N is a positive integer, and N<M. The sending module 1630 is configured to provide the second model file for the user or send the second model file to the AI application.

Optionally, the first model file is a model file of a trained AI model.

Optionally, any matrix multiplication calculation performed by using each fused operator does not depend on a calculation result of another matrix multiplication calculation performed by using the same fused operator.

Optionally, that each operator is used to perform one matrix multiplication calculation includes: each operator is used to perform a matrix multiplication calculation between a left hand side matrix and a right hand side matrix.

Optionally, the processing module 1620 is further configured to generate the second model file based on a dimension of a left hand side matrix or a dimension of a right hand side matrix in the first model file.

Optionally, left hand side matrices of a plurality of matrix multiplication calculations performed by using a first fused operator have a same dimension, right hand side matrices of the plurality of matrix multiplication calculations performed by using the first fused operator have a same dimension, and the first fused operator is any one of the N fused operators.

Optionally, the processing module 1620 is further configured to: if a dimension of a first matrix is less than a dimension of a second matrix, enable, through padding, the dimension of the first matrix to reach a dimension that is the same as the dimension of the second matrix, where the first matrix and the second matrix are left hand side matrices in a first fused group, and the second matrix is a matrix having a largest dimension in left hand side matrices in the first fused group; or the first matrix and the second matrix are right hand side matrices in the first fused group, and the second matrix is a matrix having a largest dimension in right hand side matrices in the first fused group; and the first fused group includes the plurality of matrix multiplication calculations performed by using the first fused operator.

Optionally, the processing module 1620 is further configured to: determine a plurality of second matrix multiplication calculations based on a first matrix multiplication calculation, where the first matrix multiplication calculation is a matrix multiplication calculation performed by using any one of the M operators; perform the plurality of second matrix multiplication calculations based on at least one second fused operator; and add calculation results of the plurality of second matrix multiplication calculations.

Optionally, the processing module 1620 is further configured to split the first matrix multiplication calculation into the plurality of second matrix multiplication calculations based on a dimension of the left hand side matrix or a dimension of the right hand side matrix in the first matrix multiplication calculation.

Optionally, the first fused group includes at least two different left hand side matrices, or the first fused group includes at least two different right hand side matrices.

Optionally, the AI application deploys the second model file on a cloud server of the AI application after receiving the second model file.

It should be understood that the model optimization apparatus 1600 herein may be embodied in a form of functional modules. The term "module" herein may be implemented in a form of software and/or hardware. This is not specifically limited.

For example, the "module" may be a software program, a hardware circuit, or a combination thereof that implements the foregoing function. For example, the following uses the receiving module 1610 as an example to describe an implementation of the receiving module 1610. Similarly, for implementations of other modules, for example, the processing module 1620 and the sending module 1630, refer to the implementation of the receiving module 1610.

The module is used as an example of a software functional unit, and the receiving module 1610 may include code run on a computing instance. The computing instance may include at least one of a physical host (computing device), a virtual machine, and a container. Further, there may be one or more computing instances. For example, the receiving module 1610 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers with similar geographic locations. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is disposed in one region. For communication between two VPCs in a same region and cross-region communication between VPCs in different regions, a communication gateway needs to be disposed in each VPC, and interconnection between the VPCs is implemented through the communication gateway.

The module is used as an example of a hardware functional unit, and the receiving module 1610 may include at least one computing device, for example, server. Alternatively, the receiving module 1610 may be a device implemented by using an application-specific integrated circuit (application-specific integrated circuit, ASIC) or a programmable logic device (programmable logic device, PLD), or the like. The PLD may be implemented by using a complex programmable logic device (complex programmable logic device, CPLD), a field-programmable gate array (field-programmable gate array, FPGA), generic array logic (generic array logic, GAL), or any combination thereof.

A plurality of computing devices included in the receiving module 1610 may be distributed in a same region, or may be distributed in different regions. A plurality of computing devices included in the receiving module 1610 may be distributed in a same AZ, or may be distributed in different AZs. Similarly, a plurality of computing devices included in the receiving module 1610 may be distributed in a same VPC, or may be distributed in a plurality of VPCs. The plurality of computing devices may be any combination of computing devices such as a server, an ASIC, a PLD, a CPLD, an FPGA, and a GAL.

Therefore, modules in the examples described in embodiments of this application can be implemented by using electronic hardware or a combination of computer software and electronic hardware. Whether the functions are performed by using hardware or software depends on particular applications and design constraint conditions of the technical solutions. A person skilled in the art may use different methods to implement the described functions for each particular application, but it should not be considered that the implementation goes beyond the scope of this application.

It should be noted that, when the model optimization apparatus provided in the foregoing embodiment performs the model optimization method, division into the foregoing functional modules is merely used as an example for description. During actual application, the foregoing functions may be allocated to different functional modules for implementation as required, to be specific, an internal structure of the apparatus may be divided into different functional modules to complete all or some of the functions described above. For example, the receiving module 1610 may be configured to perform any step in the model optimization method, the processing module 1620 may be configured to perform any step in the model optimization method, and the sending module 1630 may be configured to perform any step in the model optimization method. Steps that the receiving module 1610, the processing module 1620, and the sending module 1630 are responsible for implementing may be specified as required. The receiving module 1610, the processing module 1620, and the sending module 1630 separately implement different steps in the model optimization method, to implement all functions of the model optimization apparatus.

In addition, the model optimization apparatus provided in the foregoing embodiment belongs to a same concept as the model optimization method embodiments. For a specific implementation process thereof, refer to the foregoing method embodiments. Details are not described herein again.

The model optimization method provided in embodiments of this application may be performed by a computing device, and the computing device may also be referred to as a computer system. The computer system includes a hardware layer, an operating system layer running above the hardware layer, and an application layer running above the operating system layer. The hardware layer includes hardware such as a processing unit, a memory, and a memory control unit. Subsequently, functions and structures of the hardware are described in detail. An operating system is any one or more types of computer operating systems that implement service processing through a process (process), for example, a Linux operating system, a Unix operating system, an Android operating system, an iOS operating system, or a Windows operating system. The application layer includes application programs such as Browser, Contacts, word processing software, and instant messaging software. In addition, optionally, the computer system is a handheld device such as a smartphone, or a terminal device such as a personal computer. This is not particularly limited in this application, provided that the method provided in embodiments of this application can be implemented. The model optimization method provided in embodiments of this application may be performed by a computing device or a functional module that is in the computing device and that can invoke a program and execute the program.

The following describes, in detail with reference to FIG. 18, a computing device provided in an embodiment of this application.

FIG. 18 is a diagram of an architecture of a computing device 1700 according to an embodiment of this application. The computing device 1700 may be a server, a computer, or another device with a computing capability. The computing device 1700 shown in FIG. 18 includes a processor 1720, a memory 1730, a communication interface 1740, and a bus 1710. The processor 1720, the memory 1730, and the communication interface 1740 communicate with each other through the bus 1710. The computing device 1700 may be a server or a terminal device. It should be understood that quantities of processors and memories in the computing device 1700 are not limited in this application.

The bus 1710 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used in FIG. 18 for representation, but it does not mean that there is only one bus or one type of bus. The bus 1710 may include a path for transferring information between components (for example, the memory 1730, the processor 1720, and the communication interface 1740) of the computing device 1700.

The processor 1720 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1730 may include a volatile memory (volatile memory), for example, a random access memory (random access memory, RAM). The processor 1730 may alternatively include a nonvolatile memory (nonvolatile memory), for example, a read-only memory (read-only memory, ROM), a flash memory, a hard disk drive (hard disk drive, HDD), or a solid state drive (solid state drive, SSD).

The memory 1730 stores executable program code, and the processor 1720 executes the executable program code to separately implement functions of the receiving module 1610, the processing module 1620, and the sending module 1630, to implement the model optimization method described in the foregoing embodiments. In other words, the memory 1730 stores instructions used to perform the model optimization method described in the foregoing embodiments.

The communication interface 1740 uses a transceiver module, for example, but not limited to, a network interface card or a transceiver, to implement communication between the computing device 1700 and another device or a communication network.

The listed structure of the computing device 1700 is merely an example for description, and this application is not limited thereto. The computing device 1700 in this embodiment of this application includes various types of hardware in a computer system in the conventional technology. For example, the computing device 1700 further includes a memory other than the memory 1730, for example, a magnetic disk storage. A person skilled in the art should understand that the computing device 1700 may further include another component necessary for implementing normal running. In addition, a person skilled in the art should understand that, based on a specific requirement, the computing device 1700 may further include a hardware component for implementing another additional function. Moreover, a person skilled in the art should understand that the computing device 1700 may alternatively include only a component necessary for implementing embodiments of this application, and not necessarily include all the components shown in FIG. 18.

FIG. 19 is a diagram of an architecture of a computing device cluster according to an embodiment of this application.

The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 19, the computing device cluster includes at least one computing device 1700. Memories 1730 in one or more computing devices 1700 in the computing device cluster may store same instructions used to perform the model optimization method described in the foregoing embodiments.

In some possible implementations, alternatively, memories 1730 in one or more computing devices 1700 in the computing device cluster may separately store some instructions used to perform the model optimization method described in the foregoing embodiments. In other words, a combination of the one or more computing devices 1700 may jointly execute instructions used to perform the model optimization method described in the foregoing embodiments.

It should be noted that memories 1730 in different computing devices 1700 in the computing device cluster may store different instructions, separately used to perform some functions of the computing device 1700. In other words, instructions stored in memories 1730 in different computing devices 1700 may be used to implement functions of one or more of the receiving module 1610, the processing module 1620, and the sending module 1630.

Alternatively, memories 1730 in different computing devices 1700 in the computing device cluster may store different instructions, separately used to perform some functions of the model optimization apparatus 1600. **In** other words, instructions stored in memories 1730 in different computing devices 1700 may be used to implement functions of one or more of the receiving module 1610, the processing module 1620, and the sending module 1630.

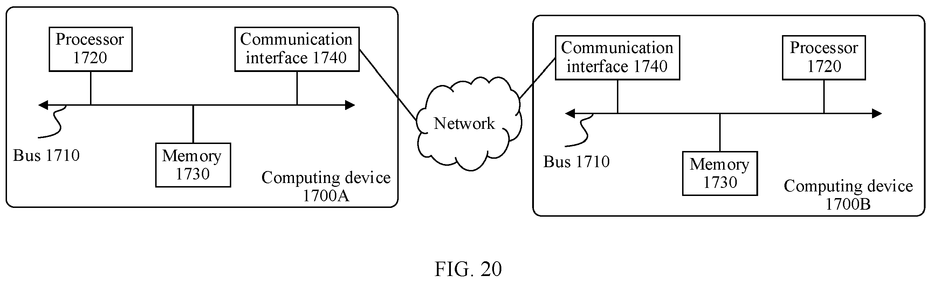

In some possible implementations, the one or more computing devices in the computing device cluster may be connected via a network. The network may be a wide area network, a local area network, or the like. FIG. 20 shows a possible implementation. FIG. 20 is a diagram in which a computing device 1700A is connected to a computing device 1700B via a network according to an embodiment of this application. The two computing devices 1700A and 1700B are connected to each other via the network, and specifically, connected to the network through communication interfaces in the computing devices. In this type of possible implementation, a memory 1730 in the computing device 1700A stores instructions for performing functions of the receiving module 1610 and the sending module 1630. In addition, a memory 1730 in the computing device 1700B stores instructions used to perform functions of the processing module 1620.

In the connection manner that is of a computing device cluster and that is shown in FIG. 20, considering that a large quantity of fused matrix multiplication calculations need to be processed in the model optimization method provided in this application, it is considered that the functions implemented by the processing module 1620 are performed by the computing device 1700B.

It should be understood that functions of the computing device 1700A shown in FIG. 20 may alternatively be implemented by a plurality of computing devices 1700. Similarly, functions of the computing device 1700B may alternatively be implemented by a plurality of computing devices 1700.

In this embodiment, a computer program product including instructions is further provided. The computer program product may be software or a program product that includes instructions and that can be run on a computing device or that can be stored in any usable medium. When the computer program product is run on at least one computing device, the computing device is enabled to perform the model optimization method provided above, or the computing device is enabled to implement functions of the model optimization apparatus 1600 provided above.

In this embodiment, a computer program product including instructions is further provided. The computer program product may be software or a program product that includes instructions and that can be run on a computing device cluster or that can be stored in any usable medium. When the computer program product is run by a computing device cluster, the computing device cluster is enabled to perform the model optimization method provided above, or the computing device cluster is enabled to implement functions of the model optimization apparatus 1600 provided above.

In this embodiment, a computer-readable storage medium is further provided. The computer-readable storage medium may be any usable medium that can be accessed by a computing device, or a data storage device such as a data center including one or more usable media. The usable medium may be a magnetic medium (for example, a floppy disk, a hard disk, or a magnetic tape), an optical medium (for example, a DVD), a semiconductor medium (for example, a solid state drive), or the like. The computer-readable storage medium includes instructions. When the instructions in the computer-readable storage medium are executed on a computing device, the computing device is enabled to perform the model optimization method provided above.

In this embodiment, a computer-readable storage medium is further provided. The computer-readable storage medium may be any usable medium that can be accessed by a computing device, or a data storage device such as a data center including one or more usable media. The usable medium may be a magnetic medium (for example, a floppy disk, a hard disk, or a magnetic tape), an optical medium (for example, a DVD), a semiconductor medium (for example, a solid state drive), or the like. The computer-readable storage medium includes instructions. When the instructions in the computer-readable storage medium are executed by a computing device cluster, the computing device cluster is enabled to perform the model optimization method provided above.

It should be understood that sequence numbers of the foregoing processes do not mean execution sequences in various embodiments of this application. The execution sequences of the processes should be determined based on functions and internal logic of the processes, and should not be understood as any limitation on the implementation processes of embodiments of this application.

A person of ordinary skill in the art may be aware that, in combination with the examples described in embodiments disclosed in this specification, units and algorithm steps can be implemented by using electronic hardware or a combination of computer software and electronic hardware. Whether the functions are performed by using hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing device, apparatus and computing device cluster, refer to the corresponding processes in the foregoing method embodiments. Details are not described herein again.

In the several embodiments provided in this application, it should be understood that the disclosed method, apparatus, and device may be implemented in other manners. For example, the apparatus embodiments described above are merely examples. For example, division into the units is merely logical function division and there may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electronic, mechanical, or other forms.

The units described as separate parts may or may not be physically separate, and the parts displayed as units may or may not be physical units, to be specific, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A model optimization method, comprising:
Receiving optimization request information entered by a user or sent by an artificial intelligence AI application, wherein the optimization request information comprises a first model file, the first model file comprises M operators, each operator is used to perform one matrix multiplication calculation, each operator corresponds to one kernel function, and M is a positive integer;
Generating a second model file based on the first model file, wherein the second model file comprises N fused operators, each fused operator is used to perform at least two matrix multiplication calculations, each fused operator corresponds to one kernel function, N is a positive integer, and N<M; and
Providing the second model file for the user or sending the second model file to the AI application.

2. The method according to claim 1, wherein the first model file is a model file of a trained AI model.

3. The method according to claim 1 or 2, wherein any matrix multiplication calculation performed by using each fused operator does not depend on a calculation result of another matrix multiplication calculation performed by using the same fused operator.

4. The method according to any one of claims 1 to 3, wherein that each operator is used to perform one matrix multiplication calculation comprises:
each operator is used to perform a matrix multiplication calculation between a left hand side matrix and a right hand side matrix.

5. The method according to claim 4, wherein the generating a second model file based on the first model file comprises:
generating the second model file based on a dimension of a left hand side matrix or a dimension of a right hand side matrix in the first model file.

6. The method according to claim 4 or 5, wherein left hand side matrices of a plurality of matrix multiplication calculations performed by using a first fused operator have a same dimension, right hand side matrices of the plurality of matrix multiplication calculations performed by using the first fused operator have a same dimension, and the first fused operator is any one of the N fused operators.

7. The method according to any one of claims 4 to 6, wherein the method further comprises:
determining a plurality of second matrix multiplication calculations based on a first matrix multiplication calculation, wherein the first matrix multiplication calculation is a matrix multiplication calculation performed by using any one of the M operators;
performing the plurality of second matrix multiplication calculations based on at least one second fused operator; and
adding calculation results of the plurality of second matrix multiplication calculations.

8. The method according to claim 7, wherein the determining a plurality of second matrix multiplication calculations based on a first matrix multiplication calculation comprises:
splitting the first matrix multiplication calculation into the plurality of second matrix multiplication calculations based on a dimension of a left hand side matrix or a dimension of a right hand side matrix in the first matrix multiplication calculation.

9. The method according to any one of claims 1 to 8, wherein the AI application deploys the second model file on a cloud server of the AI application after receiving the second model file.

10. A model optimization apparatus, comprising:
a receiving module, configured to receive optimization request information entered by a user or sent by an artificial intelligence AI application, wherein the optimization request information comprises a first model file, the first model file comprises M operators, each operator is used to perform one matrix multiplication calculation, each operator corresponds to one kernel function, and M is a positive integer;
a processing module, configured to generate a second model file based on the first model file, wherein the second model file comprises N fused operators, each fused operator is used to perform at least two matrix multiplication calculations, each fused operator corresponds to one kernel function, N is a positive integer, and N<M; and
a sending module, configured to provide the second model file for the user or send the second model file to the AI application.

11. The apparatus according to claim 10, wherein the first model file is a model file of a trained AI model.

12. The apparatus according to claim 10 or 11, wherein any matrix multiplication calculation performed by using each fused operator does not depend on a calculation result of another matrix multiplication calculation performed by using the same fused operator.

13. The apparatus according to any one of claims 10 to 12, wherein that each operator is used to perform one matrix multiplication calculation comprises: each operator is used to perform a matrix multiplication calculation between a left hand side matrix and a right hand side matrix.

14. The apparatus according to claim 13, wherein the processing module is further configured to generate the second model file based on a dimension of a left hand side matrix or a dimension of a right hand side matrix in the first model file.

15. The apparatus according to claim 13 or 14, wherein left hand side matrices of a plurality of matrix multiplication calculations performed by using a first fused operator have a same dimension, right hand side matrices of the plurality of matrix multiplication calculations performed by using the first fused operator have a same dimension, and the first fused operator is any one of the N fused operators.

16. The apparatus according to any one of claims 13 to 15, wherein the processing module is further configured to:
determine a plurality of second matrix multiplication calculations based on a first matrix multiplication calculation, wherein the first matrix multiplication calculation is a matrix multiplication calculation performed by using any one of the M operators;
perform the plurality of second matrix multiplication calculations based on at least one second fused operator; and
add calculation results of the plurality of second matrix multiplication calculations.

17. The apparatus according to claim 16, wherein the processing module is specifically configured to:
split the first matrix multiplication calculation into the plurality of second matrix multiplication calculations based on a dimension of a left hand side matrix or a dimension of a right hand side matrix in the first matrix multiplication calculation.

18. The apparatus according to any one of claims 10 to 17, wherein the AI application deploys the second model file on a cloud server of the AI application after receiving the second model file.

19. A computing device cluster, comprising at least one computing device, wherein each computing device comprises a processor and a memory; and
a processor of the at least one computing device is configured to execute instructions stored in a memory of the at least one computing device, to enable the computing device cluster to perform the method according to any one of claims 1 to 9.

20. A computer program product comprising instructions, wherein when the instructions are run by a computing device cluster, the computing device cluster is enabled to perform the method according to any one of claims 1 to 9.

21. A computer-readable storage medium, comprising computer program instructions, wherein when the computer program instructions are executed by a computing device cluster, the computing device cluster performs the method according to any one of claims 1 to 9.
